# EUROPÄISCHE PATENTANMELDUNG

(11) **EP 1 842 697 A1**
(43) Veröffentlichungstag der Anmeldung: **10.10.2007**
(21) Anmeldenummer: 07104720.3
(22) Anmeldetag: 23.03.2007
(51) Int. Cl.: B60C 15/02, B60C 25/00, B29C 33/62, C10M 107/32

(54) **Verwendung einer Zusammensetzung zum Montieren von Fahrzeugreifen**

(30) Priorität: 04.04.2006 DE 102006016051
(71) Anmelder: Continental Aktiengesellschaft, 30165 Hannover (DE)
(72) Erfinder: Lacayo-Pineda, Jorge, 31535, Neustadt (DE); Sostmann, Stefan, 30855, Langenhagen (DE); Schunack, Michael, 30161, Hannover (DE)
(74) Vertreter: Finger, Karsten

(57) **Zusammenfassung**

Zur Verbesserung der Haftung zwischen Reifen und Felge bei einem mit Hilfe eines Montagemittels montierten Reifen wird eine Zusammensetzung verwendet, die zumindest einen Kautschuklatex enthält.

## Beschreibung

Die Erfindung betrifft die Verwendung einer Zusammensetzung zum Montieren von Fahrzeugreifen.

Durch den hohen Reibungskoeffizienten der vulkanisierten Kautschukmischung von Fahrzeugluftreifen lassen sich Reifen häufig nur mit hohem Kraftaufwand auf der Felge montieren, wobei die Reifenwülste über die Felgenhörner gehoben werden müssen. Um die Montage zu vereinfachen und die Wülste vor Beschädigungen während der Montage zu schützen, ist es bekannt, die Kontaktbereiche zwischen Wulst und Felge, d. h. den Wulst und/oder die Felge, mit Gleit- und Trennmitteln zu behandeln, die als so genannte Montagepasten, -cremes, -wachse oder -fluids erhältlich sind.

Die unterschiedlichen Montagemittel sollen sich insbesondere dadurch auszeichnen, dass sie sich chemisch neutral gegenüber dem Gummi und dem Metall der Felge verhalten und eine hohe Gleitwirkung bei der Montage aufweisen. Gleichzeitig sollen die Montagemittel schnell trocknen und einen Kraftschluss zwischen Felge und Reifen gewährleisten, damit der Reifen nicht auf der Felge durchrutscht. Weitere Anforderungen, die an Montagemittel gestellt werden, sind die Schleuderfestigkeit und ggf. die ökologische Unbedenklichkeit.

Als Montagemittel werden Zusammensetzungen mit unterschiedlichen Inhaltsstoffen verwendet, wobei im Wesentlichen folgende Substanzen bzw. Substanzklassen zum Einsatz kommen: Glycerin, Tenside (z. B. Seifen, Sulfonate), Silikonöle, -harze und -tenside, Cellusosederivate, Polyacrylate, Polyethylenglycole und Polyether. Montagepasten auf Seifenbasis enthalten als weitere Inhaltsstoffe üblicherweise ein Verdickungsmittel und Wasser. Um die Trocknungszeit des Montagemittels zu verbessern, ist es bekannt, dem Montagemittel ein schneller flüchtiges Lösemittel zuzusetzen.

In der EP 0 223 146 B1 ist eine wässrige Montagepaste für Fahrzeugluftreifen beschrieben, die ein Cellulosederivat, einen nichtionischen Polyglycolether und ein oder mehrere Konservierungs- und/oder Rostschutzmittel enthält.

Die DE 195 15 314 C1 offenbart biologisch abbaubare Gleit- und Trennmittel für Kautschuk und Gummi, die spezielle Polyester enthalten.

Der Erfindung liegt nun die Aufgabe zu Grunde, die Haftung zwischen Reifen und Felge bei einem mit Hilfe eines Montagemittels montierten Reifen zu verbessern.

Gelöst wird diese Aufgabe erfindungsgemäß dadurch, dass bei der Montage des Fahrzeugreifens eine Zusammensetzung verwendet wird, die zumindest einen Kautschuklatex enthält.

Es hat sich gezeigt, dass die Verwendung einer Zusammensetzung, die zumindest einen Kautschuklatex enthält, als Montagemittel nach dem Montieren des Reifens und schneller Trocknung zu einer äußerst sicheren Haftung zwischen Felge und Reifen führt. Der Latex wirkt nach Trocknung als physikalischer Klebstoff.

Die Verwendung eines Kautschuklatex enthaltenden Montagemittels bietet außerdem die Vorteile, dass Kautschuklatex in großen Mengen am Markt erhältlich ist und auch in weiteren Grenzen mit anderen Substanzen und Wasser oder Lösemitteln mischbar ist. Durch unterschiedliche Feststoffgehalte der Zusammensetzung und/oder Zugabe von Füllstoffen oder Verdickern, können so Montagemittel unterschiedlicher Konsistenz erhalten werden. Es lassen sich streich- und pinselfähige wie auch sprühfähige Montagemittel erzeugen. Die Bereitstellung einer sprühfähigen Zusammensetzung bietet den Vorteil, dass das Einsprühen der Reifenwülste und die anschließende Montage automatisiert werden kann.

Nach der Demontage des Reifens lässt sich die getrocknete Zusammensetzung leicht von der Felge entfernen und hinterlässt keine unschönen Verschmutzungen.

Bei dem oder den im Montagemittel enthaltenen Kautschuklatex bzw. -latices kann es sich sowohl um Latex von Synthesekautschuken, wie z. B. Styrolbutadienkautschuk, Butadienkautschuk, Isoprenkautschuk, Acrylnitrilbutadienkautschuk, Ethylenvinylacetatkautschuk, Chloroprenkautschuk, Vinylpyridinkautschuk, Butylkautschuk oder anderen, als auch um Naturkautschuklatex handeln. Die verschiedenen Latextypen können in beliebigen Verschnitten eingesetzt werden.

Bevorzugt enthält die Zusammensetzung jedoch Naturkautschuklatex, der eine besonders gute Haftung zwischen Reifen und Felge nach Trocknung bewirkt. Es handelt sich außerdem um einen nachwachsenden Rohstoff. Der Naturkautschuklatex kann aus unterschiedlichen Kautschukpflanzen, vorzugsweise aus *Hevea Brasiliensis* oder dem Guayulestrauch (lat. *Parthenium Argentatum*)*,* gewonnen sein. Wird Kautschuklatex aus *Hevea Brasiliensis* eingesetzt, kann dieser auch deproteiniert sein. Guayule-Latex zeichnet sich durch einen von Natur aus geringeren Proteingehalt (verglichen mit Latex aus *Hevea brasiliensis*) aus und ist darüber hinaus frei von Proteinen, die eine Typ I Latexallergie auslösen.

Gemäß einer vorteilhaften Weiterbildung der Erfindung weist der Kautschuklatex einen Feststoffanteil von 40 bis 80 Gew.-% auf. Es können demnach auch aufkonzentrierte Latex-Typen verwendet werden.

Die Anteile an Kautschuklatex sind je nach gewünschter Konsistenz und gewünschter Haftung in weiten Grenzen variierbar. Bezogen auf das Gesamtgewicht der Zusammensetzung zum Montieren von Reifen können 1 bis 90 Gew.-%, vorzugsweise 30 bis 90 Gew.-%, des Kautschuklatex enthalten sein. Bei höheren Anteilen an Latex kann die Haftung verstärkt werden. Geringere Latexanteile bewirken hingegen eine bessere Sprühbarkeit der Zusammensetzung und es verbleiben nach der Demontage des Reifens weniger Kautschukreste auf der Felge.

Um die Haftung zwischen Reifen und Felge weiter zu verbessern, hat es sich als vorteilhaft erwiesen, wenn die Zusammensetzung auch eine wässrige Dispersion zumindest eines Klebharzes enthält. Es können auch mehrere Klebharze im Gemisch eingesetzt werden.

Als Klebharze können natürliche oder synthetische Harze, wie Kohlenwasserstoffharze, eingesetzt werden, die als Klebrigmacher wirken. Bevorzugt sind die Klebharze ausgewählt aus der Gruppe, bestehend aus Kolophoniumharzen und deren Estern, Terpen-Phenol-Harzen, Alkin-Phenol-Harzen, Phenol-Harzen und Cumaron-Inden-Harzen. Montagemittel mit diesen Klebharzen zeigen eine besonders hohe Klebwirkung zwischen Reifen und Felge.

Das Kolophonium, das aus dem Baumharz verschiedener Nadelhölzer gewonnen werden kann, besteht im Wesentlichen aus einem Gemisch aus Harzsäuren und Terpenen. Die Veresterung der entsprechenden Bestandteile des Kolophoniums erfolgt auf herkömmliche Art und Weise. So ist es denkbar, das Kolophonium z. B. mit Alkoholen bzw. Alkoholgemischen umzusetzen. Auch ist es möglich, dass aus dem Kolophonium gewisse Bestandteile, wie z. B. die Abietinsäure, Dehydroabietinsäure, Tetrahydroabietinsäure, Dihydroabietinsäure, deren Isomere und/oder Mischungen hieraus, gewonnen werden und diese Bestandteile einzeln oder gemeinsam mit Alkoholen oder Alkoholgemischen umgesetzt werden. Bevorzugt werden als Alkohole z. B. Methanol, Ethanol, Propan-1,2,3-triol und/oder Pentaerithrithol verwendet.

Terpen-Phenol-Harze sind solche Harze, die durch Säure-katalysierte Addition von Phenolen an Terpene hergestellt werden.

Als Alkin-Phenol-Harz können Harze verwendet werden, die als Alkin z. B. Ethin und als Phenolkomponente z. B. Butylphenol oder Novolacke aus Formaldehyd und z. B. p-tert. Butylphenol (oder p-Diisobutylphenol) enthalten.

Cumaron-Inden-Harze fallen als Copolymere bei der Polymerisation der im Leichtöl des Steinkohlenteers enthaltenen ungesättigten Verbindungen an.

Die verwendeten Klebharzdispersionen weisen bevorzugt einen Feststoffanteil von 40 bis 60 Gew.-% auf. Derartige Dispersionen lassen sich gut mit Kautschuklatex zu einer homogenen Zusammensetzung verarbeiten.

Auch die Menge an zudosierter Klebharzdispersion ist innerhalb weiter Grenzen variierbar. Vorzugsweise werden 1 bis 90 Gew.-%, besonders bevorzugt 10 bis 40 Gew.-%, einer Klebharzdispersion eingesetzt.

Für ein besonders gutes Verhältnis von Gleitwirkung im nicht getrockneten Zustand und Haftwirkung im getrockneten Zustand enthält die als Montagemittel verwendete Zusammensetzung Kautschuk und Klebharz im Gewichtsverhältnis von 5:1 bis 1:5.

Um die Gleitwirkung der Zusammensetzung zu verbessern und ein schnelleres Abtrocknen zu erzielen, enthält die Zusammensetzung gemäß einer bevorzugten Weiterbildung der Erfindung 1 bis 40 Gew.-% zumindest eines organischen Lösemittels.

Bei den einsetzbaren Lösemitteln kann es sich um all solche handeln, die mit Wasser mischbar sind und schneller als Wasser verdampfen. Von Vorteil ist es, wenn die eingesetzten Lösemittel nicht toxisch und ökologisch unbedenklich sind. Vorteilhafterweise werden daher als organische Lösemittel für die Zusammensetzung Ethanol, Propanol, Isopropanol, Ethylenglycol und/oder Propylenglycol eingesetzt. Diese Lösemittel verbessern die Schmierwirkung und entfalten außerdem eine Gefrierschutzwirkung, da sie den Gefrierpunkt der Zusammensetzung absenken. Das Montagemittel wird dadurch beim Transport und bei der Lagerung vor Koagulation durch Frosteinwirkung geschützt.

Das Montagemittel kann weitere übliche Zusatzstoffe in üblichen Mengen enthalten. So können dem Montagemittel Alterungsschutz- bzw. Konservierungsmittel zur Sicherung der Einsatzbereitschaft des Montagemittels bei Lagerung zugesetzt werden. Ferner kann das Montagemittel Dispergiermittel, Emulgiermittel, Schaumstabilisatoren, Verdicker, pH-Regulatoren, Füllstoffe (z. B. faserige Materialien (Natur- oder Synthesefasern), Kieselsäure, Talk, Kreide, Ruß, Gummimehl oder Ähnliches), Korrosions- und Rostschutzmittel zum Schutz der Felge sowie oberflächenaktive Substanzen enthalten. Bei den oberflächenaktiven Substanzen kann es sich beispielsweise um anionisch oberflächenaktive Mittel, wie solche aus Carboxylat-, Sulfat-, Estersulfat- oder Esterphosphatsystemen, und/oder nicht-ionische oberflächenaktive Mittel, wie solche aus Polyoxyalkylenether-, Polyoxyalkylenester-, mehrwertigen Alkohol-Fettsäureester-, Zucker-Fettsäureester- und Alkylpolyglycosidsystemen, handeln. So können beispielsweise Polyoxyethylenlaurylether-Natriumsulfat und/oder Kaliumresinat eingesetzt werden.

Die Herstellung des Montagemittels kann nach üblichen Misch- und Rührverfahren erfolgen. Bei der Montage des Reifens kann dann das Montagemittel je nach Konsistenz entweder mit einem Pinsel, einem Schwamm oder Ähnlichem auf den Kontaktbereich zwischen Wulst und Felge aufgestrichen oder mit Hilfe von Sprühvorrichtungen auf den Kontaktbereich ggf. auch automatisch aufgesprüht werden. Danach werden die Wülste des Reifens mit üblichen Werkzeugen über die Felgenhörner der Fahrzeugfelge gehoben, wobei sie durch das vorhandene Montagemittel leicht über die Felgenhörner gleiten. Nach kurzer Zeit ist das Montagemittel getrocknet und gewährleistet eine sichere Haftung zwischen Felge und Reifen.

Anhand von Vergleichs- und Ausführungsbeispielen soll die Erfindung näher erläutert werden.

Es wurde ein Montagemittel A durch Vermischen von 80 Gew.-% eines Hevea-Naturkautschuklatex (Feststoffgehalt: 60 Gew.-%) und 20 Gew.-% einer wässrigen Harzdispersion (Feststoffgehalt: 50 Gew.-%, Harztyp: Kolophoniumharzester, Tacolyn 3179 H der Firma Eastman Chemical Company, Middelburg BV, Niederlande) hergestellt. Mit diesem Montagemittel und 3 weiteren handelsüblichen Montagepasten wurden Versuche zur Haftreibung zwischen einer üblichen Wulstmischung für Reifen und lackiertem Felgen aus Aluminium durchgeführt. Die Kontaktfläche zwischen den Materialien betrug 5,44 cm² bei einer Normalkraft von 176 N. Die maximale Haftkraft wurde über eine Umlenkrolle mit einer Zugprüfmaschine des Typs ZWICK Z2.5 der Firma Zwick GmbH, Deutschland, bei einer Prüfgeschwindigkeit von 800 mm/min gemessen. Der Reibungskoeffizient µ wurde nach unterschiedlichen Zeiten nach der Aufbringung des Montagemittels bestimmt. Die Ergebnisse sind in Tabelle 1 dargestellt. Bei den handelsüblichen Montagepasten handelte es sich um
B: Universal Montagepaste, STAHLGRUBER Otto Gruber GmbH & Co KG, Deutschland
C: Breitreifen Montagepaste, STAHLGRUBER Otto Gruber GmbH & Co KG, Deutschland
D: Premium-Seal HCF, Premium Vertriebs GmbH, Deutschland

| Montagemittel | µ nach 10 min | µ nach 16 h |
|---|---|---|
| ohne Montagemittel | 1,9 | 1,9 |
| A | 0,6 | 3,0 |
| B | 0,2 | - |
| C | 0,2 | - |
| D | 0,4 | 1,0 |

Aus der Tabelle 1 wird ersichtlich, dass mit dem Montagemittel A aus Naturkautschuklatex und Harzdispersion 10 min nach dem Auftragen des Mittels ein niedriger Reibungskoeffizient vorliegt, es liegt eine gute Schmierwirkung vor. Nach 16 h Trocknungszeit ist jedoch eine hervorragende Haftung zwischen lackiertem Aluminium und Gummi gewährleistet, die sogar über einer nicht mit Montagemittel behandelten Probe liegt. Bei den herkömmlichen Montagepasten B, C und D dauert die Trocknung länger und führt nicht zu so hohen Haftreibungen wie bei Verwendung des Montagemittels A.

Bei der Montage von Reifen auf lackierte Aluminiumfelgen haben die ermittelten Haftreibungskoeffizienten zur Folge, dass Reifen mit dem Montagemittel A sehr leicht und ohne Beschädigungen montiert werden können und schon nach kurzer Trocknungszeit eine optimale Haftung zwischen Reifen und Felge gewährleistet ist, während sich bei Verwendung der Montagepasten B, C und D die Reifen zwar leicht montieren lassen, die Trocknungszeit aber viel länger ist und auch nicht derartig hohe Haftungen wie mit dem Montagemittel A erzielt werden. Dies hat sich in der praktischen Anwendung bestätigt.

## Patentansprüche

1. Verwendung einer Zusammensetzung, die zumindest einen Kautschuklatex enthält, zum Montieren von Fahrzeugreifen.

2. Verwendung nach Anspruch 1, **dadurch gekennzeichnet, dass** die Zusammensetzung Naturkautschuklatex enthält.

3. Verwendung nach Anspruch 1 oder 2, **dadurch gekennzeichnet, dass** der Kautschuklatex oder die Kautschuklatices einen Feststoffanteil von 40 bis 80 Gew.-% aufweist bzw. aufweisen.

4. Verwendung nach Anspruch 3, **dadurch gekennzeichnet, dass** die Zusammensetzung 1 bis 90 Gew.-%, bezogen auf das Gesamtgewicht der Zusammensetzung, vorzugsweise 30 bis 90 Gew.-%, Kautschuklatex enthält.

5. Verwendung nach zumindest einem der vorhergehenden Ansprüche, **dadurch gekennzeichnet, dass** die Zusammensetzung eine wässrige Dispersion zumindest eines Klebharzes enthält.

6. Verwendung nach Anspruch 5, **dadurch gekennzeichnet, dass** das oder die Klebharz(e) ausgewählt ist bzw. sind aus der Gruppe, bestehend aus Kolophoniumharzen und deren Estern, Terpen-Phenol-Harzen, Alkin-Phenol-Harzen, Phenol-Harzen und Cumaron-Inden-Harzen.

7. Verwendung nach Anspruch 5 oder 6, **dadurch gekennzeichnet, dass** die wässrige Klebharzdispersion einen Feststoffanteil von 40 bis 60 Gew.-% aufweist.

8. Verwendung nach Anspruch 7, dass die Zusammensetzung 1 bis 90 Gew.-%, bezogen auf das Gesamtgewicht der Zusammensetzung, vorzugsweise 10 bis 40 Gew.-%, der wässrigen Klebharzdispersion enthält.

9. Verwendung nach Anspruch zumindest einem der Ansprüche 5 bis 8, **dadurch gekennzeichnet, dass** die Zusammensetzung Kautschuk und Klebharz im Gewichtsverhältnis von 5:1 bis 1:5 enthält.

10. Verwendung nach zumindest einem der vorhergehenden Ansprüche, **dadurch gekennzeichnet, dass** die Zusammensetzung 1 bis 40 Gew.-% zumindest eines organischen Lösemittels enthält.

11. Verwendung nach Anspruch 11, **dadurch gekennzeichnet, dass** das oder die Lösemittel ausgewählt sind aus der Gruppe, bestehend aus Ethanol, Propanol, Isopropanol, Ethylenglycol und Propylenglycol.

12. Montagemittel zum Montieren von Fahrzeugreifen, **dadurch gekennzeichnet, dass** es einen Kautschuklatex enthält.
